# EUROPÄISCHE PATENTSCHRIFT

(11) **EP 0 805 007 B1**
(45) Veröffentlichungstag und Bekanntmachung des Hinweises auf die Patenterteilung: **26.01.2000**
(21) Anmeldenummer: 97103935.9
(22) Anmeldetag: 10.03.1997
(51) Int. Cl.: B27G 21/00, B27C 5/04

(54) **Anlaufleiste**
Guide bar
Barre d'appui

(30) Priorität: 14.02.1997 DE 29702520 U; 04.05.1996 DE 19617888
(43) Veröffentlichungstag der Anmeldung: 05.11.1997
(73) Patentinhaber: AIGNER, Georg, D-94419 Reisbach (DE)
(72) Erfinder: AIGNER, Georg, D-94419 Reisbach (DE)
(74) Vertreter: Gustorf, Gerhard, Dipl.-Ing.

(56) Entgegenhaltungen:
- WO-A-94/11641

## Beschreibung

Die Erfindung betrifft eine Anlaufleiste mit einem Klemmorgan zur höhenverstellbaren Befestigung an einer Vertikalführung einer Schutzhaube für Holzfräsmaschinen, wobei von dem Klemmorgan eine Stange absteht, an der die Anlaufleiste verstellbar befestigt ist.

Zum Abdecken eines an einer Spindel befestigten Fräswerkzeuges von Holzfräsmaschinen sind Schutzhauben bekannt, die aus zwei durch eine Rückwand miteinander verbundenden Seitenwänden, einem höhenverstellbaren, vorderen Schutzschild und einem Deckel bestehen, an dem eine Anschlußöffnung für eine Absaugvorrichtung vorgesehen ist. Die Seitenwände haben Vertikalführungen, die zur höhenverstellbaren Aufnahme einer Anlaufleiste dienen.

Aus der DE-PS 39 31 141 ist eine Schutzhaube mit einer Anlaufleiste bekannt, die in Längsrichtung verstellbar an einem Winkelstück befestigt ist. Das Winkelstück ist seinerseits über ein Klemmstück in einer Vertikalnut höhenverstellbar befestigt, die zur Innenseite der Schutzhaube hin offen ist. Aufgrund dieser Konstruktion ist es schwierig, Einstellungen durchzuführen, weil zuvor das Werkzeug ausgebaut werden muß, um den nötigen Zugang zu den innenliegenden Schrauben zu erhalten. Ein weiterer Nachteil besteht darin, daß die an der Innenseite der Schutzhaube offene Vertikalnut sehr rasch durch Staub und Späne verschmutzt wird, so daß sie für eine Vertikalverstellung des Winkelstücks öfter gereinigt werden muß.

Gegenstand der EP-PS 621 926 ist eine Anlaufleiste der eingangs umrissenen Bauart, die zur Vermeidung der oben erläuterten Nachteile leicht zugänglich an einer nach vorn weisenden Kante der Schutzhaube befestigt ist, wobei zur Betätigung des Klemmorgans für die Höhenverstellung der Anlaufleiste ohne Zuhilfenahme von Werkzeugen eine Stellschraube vorgesehen ist, die über einen Keil zwei Kopfteile gegen die Wände einer Vertikalnut verspreizt; über dieselbe Stellschraube kann die Anlaufleiste auch gelöst werden, um sie aus einer vertikalen Ruhestellung in eine horizontale Arbeitsstellung zu schwenken.

Der Erfindung liegt die Aufgabe zugrunde, eine Anlaufleiste zur Verfügung zu stellen, die gegenüber der zuletzt genannten Konstruktion noch einfacher und rascher von Hand verstellt und so an der Schutzhaube angebracht werden kann, daß auch in ungünstigsten Fällen eine leichtgängige Betätigung sowohl zur Höhenverstellung als auch zum Schwenken aus der Ruhestellung in die Arbeitsstellung und umgekehrt gewährleistet ist.

Bei einer Anlaufleiste der angegebenen Bauart wird diese Aufgabe erfindungsgemäß dadurch gelöst, daß das Klemmorgan aus einem an der Vertikalführung fixierbaren Gleitblock mit einer Horizontalbohrung besteht, in der die Stange gegen die Kraft einer Feder längsverschieblich so gelagert ist, daß sie von Hand aus einer ersten Raststellung in eine zweite, zu dieser um 90° gedrehte Raststellung geschwenkt werden kann.

Dabei ist es vorteilhaft, wenn ein aus dem Gleitblock herausragender Abschnitt der Stange einen vorzugsweise quadratischen Polygonquerschnitt hat, der in den beiden Raststellungen in einen entsprechenden Polygonsitz des Gleitblocks eingreift.

Die erfindungsgemäß vorgesehene Lösung hat den Vorteil, daß die Stange gegen die Kraft der Feder leicht von Hand herausgezogen werden kann, um die Anlaufleiste aus ihrer Ruhestellung in die Arbeitsstellung und umgekehrt zu schwenken, ohne daß hierfür eine oftmals umständlich zu betätigende Stellschraube verdreht werden muß. Das Schwenken der Stange aus der ersten in die zweite Raststellung und umgekehrt läßt sich damit wesentlich rascher vornehmen, wobei hinzukommt, daß die erfindungsgemäß vorgesehene Lagerung der Stange in dem Gleitblock mit konstruktiv sehr einfachen Mitteln realisiert werden kann.

Für einen störungsfreien Betrieb, insbesondere bei der Vertikalverstellung des Gleitblocks, ist es vorteilhaft, wenn dieser mittels eines von einer Klemmschraube feststellbaren Klemmsteines in eine seitlich nach außen weisende Vertikalnut der Schutzhaube eingreift. Die Vertikalnut ist somit in einem Bereich eingearbeitet, der frei von Verschmutzungen durch Staub und Späne ist.

Eine besonders einfache Ausgestaltung der Verstellmöglichkeit der Anlaufleiste an der Stange ergibt sich dann, wenn die Stange ein aus dem Gleitblock hervorstehendes, plattenförmiges Ende hat, das in eine Ausnehmung der Anlaufleiste eingreift und mit Hilfe einer Stellschraube verschiebbar und festklemmbar ist, die ein Langloch in der Oberseite der Anlaufleiste durchgreift.

Um die eingestellte Position der Anlaufleiste leicht und sicher zu fixieren, kann auf die Stellschraube ein konischer Klemmkörper aufgeschraubt sein, der in eine konische Aufnahmebohrung des plattenförmigen Endes der Stange eingreift. Der konische Klemmkörper weist an seinem Ende größeren Durchmessers vorzugsweise eine Führungsschiene auf, die in ein dem Langloch in der Oberseite gegenüberliegendes Langloch in der Unterseite der Anlaufleiste eingreift.

Nach einem weiteren, sehr wesentlichen Merkmal der Erfindung ist am freien Ende der Anlaufleiste ein Reibungsbremselement ausgebildet, das in Berührung mit einem Anlaufring gebracht werden kann. Beim Stand der Technik war es bisher schwierig, das freie Ende der Anlaufleiste in jeder Situation so eng gegen den Anlaufring hin zu verstellen, daß eine Rotation des Anlaufringes durch den schnellaufenden Fräser unterbunden wird. Dieser Nachteil wird durch das Reibungsbremselement sicher vermieden, da dieses auch dann am Anlaufring anliegt und diesen an einer Drehung hindert, wenn die Anlaufleiste aufgrund von Einstellungenauigkeiten oder Abnutzungserscheinungen nicht in der Lage ist, den Anlaufring festzuhalten.

Das Reibungsbremselement kann ein Einsatz sein, der in einer zum Anlaufring hin offenen Ausnehmung der Anlaufleiste so angebracht ist, daß er an dieser um eine in deren horizontaler Arbeitsstellung senkrechte Achse gegen die Kraft einer Feder schwenkbar gelagert ist und eine dem Anlaufring zugewandte, konkave Bogenfläche hat. Diese Bogenfläche gestattet es, den Einsatz und damit auch die Anlaufleiste eng am Anlaufring anliegend zu positionieren, so daß die Werkstücke, die über die Anlaufleiste in die Frässtellung gebracht werden, nahezu übergangslos in den Bereich des Anlaufringes geschoben werden können.

Um diese übergangslose Zuführung der Werkstücke noch weiter zu verbessern, ist vorgesehen, daß das freie, spitz zulaufende Ende der Bogenfläche des Einsatzes, das in Arbeitsstellung an dem Anlaufring anliegt, in der gegen die Kraft der Feder vollständig in die Ausnehmung der Anlaufleiste eingeschwenkten Stellung der freien, schnabelförmig auslaufenden Spitze am Ende der Ausnehmung der Anlaufleiste eng benachbart ist.

Die Erfindung ist nachstehend an zwei Ausführungsbeispielen erläutert, die in der Zeichnung dargestellt sind. Es zeigen:
Figur 1 die perspektivische Ansicht einer Schutzhaube für Holzfräsmaschinen, an der eine erfindungsgemäß ausgebildete Anlaufleiste angebracht ist,
Figur 2 eine der Figur 1 entsprechende Darstellung, wobei die Anlaufleiste in ihre Ruhestellung hochgeschwenkt ist,
Figur 3 eine Draufsicht der an eine der beiden Seitenwände der Schutzhaube angebauten Anlaufleiste,
Figur 4 eine der Figur 3 entsprechende Darstellung, in der die Lagerung des Klemmorgans in einer Vertikalnut der Seitenwand und die Lagerung des Reibungsbremselementes am freien Ende der Anlaufleiste gestrichelt dargestellt sind,
Figur 5 eine teilweise geschnittene Draufsicht der in den Figuren 3 und 4 gezeigten Seitenwand der Schutzhaube,
Figur 6 eine aufgeschnittene, vordere Schrägansicht der Anlaufleiste zur Darstellung des Klemmorgans mit der dieses mit der Anlaufleiste verbindenden Stange,
Figur 7 einen Längsschnitt durch das als Gleitblock ausgebildete Klemmorgan,
Figur 8 eine Draufsicht der das Klemmorgan mit der Anlaufleiste verbindenden Stange,
Figur 9 eine Endansicht der Stange in Richtung des Pfeiles IX der Figur 8,
Figur 10 die Ansicht einer Schutzhaube mit abgeänderter Anlaufleiste und
Figur 11 eine Explosionsdarstellung der Anlaufleiste mit Klemmorgan gemäß Figur 10.

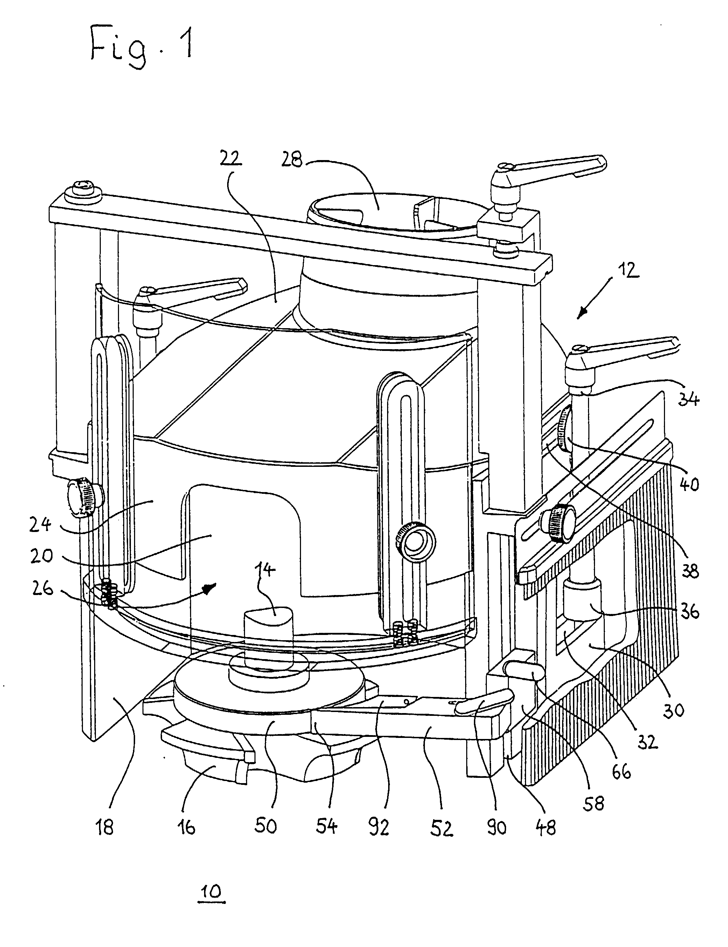

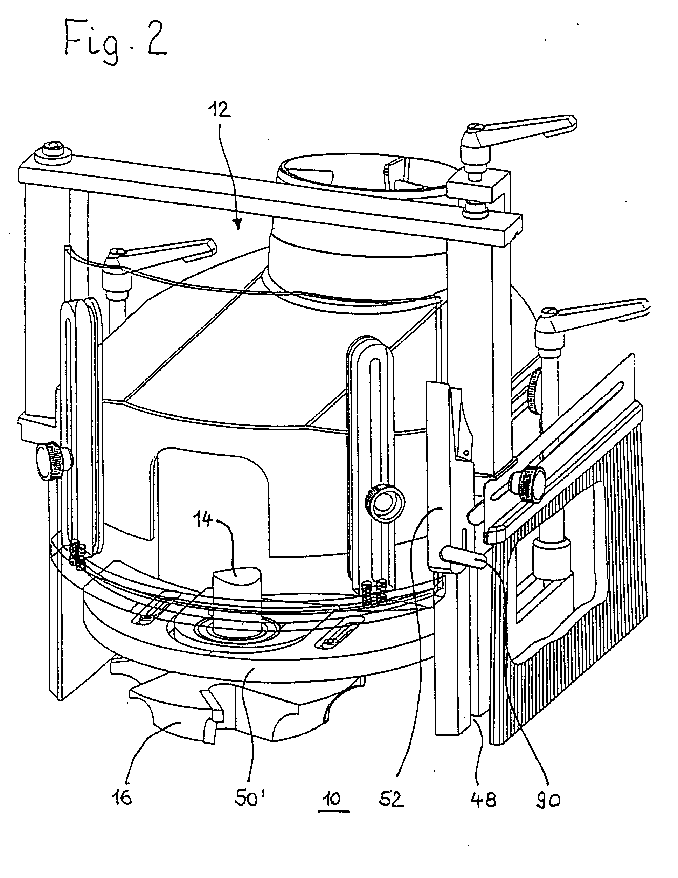

In den Figuren 1 und 2 ist ein waagrechter Maschinentisch 10 einer Holzfräsmaschine angedeutet, auf dem eine Schutzhaube 12 fixiert ist, die den Arbeitsbereich eines an einer Spindel 14 angebrachten Fräswerkzeugs 16 abdeckt. Die Schutzhaube 12 besteht aus zwei Seitenwänden 18, einer diese verbindenden Rückwand 20 und einem Deckel 22, der einstückig mit der Rückwand 20 ausgebildet ist. Von dem Deckel 22 steht nach vorn und seitlich ein Rand 24 nach unten ab, der im vorderen Bereich eine nach unten offene Aussparung 26 hat, welche die Sicht in das Innere der Schutzhaube 12 vergrößert. Der Deckel 22 hat in seinem hinteren Bereich einen Stutzen 28 für den Anschluß einer Absaugvorrichtung.

Im unteren Bereich hat jede Seitenwand 18 eine nach außen vorspringende Stufe 30, in die ein vertikaler Längsschlitz 32 eingearbeitet ist. Durch diesen ist das Gewindeende einer Schraube 34 gesteckt, die in ihrem mittleren Bereich einen Bund 36 hat, der sich auf der Oberseite der Stufe 30 abstützt. Das Gewindeende der Schraube 34 ist in eine Gewindebohrung des Maschinentisches 10 eingeschraubt, so daß die Schutzhaube 12 mittels der Schrauben 34 auf diesem fixiert werden kann.

In jede Seitenwand 18 ist oben ein horizontal verlaufender Längsschlitz 38 eingearbeitet, durch den eine Rändelschraube 40 gesteckt ist, welche in eine Gewindebohrung am nach unten abstehenden Rand 24 des Deckels 22 eingeschraubt ist. Nach Lösen der Rändelschraube 40 kann die Seitenwand 18 relativ zu der Schutzhaube 12 nach vorn oder hinten verstellt werden.

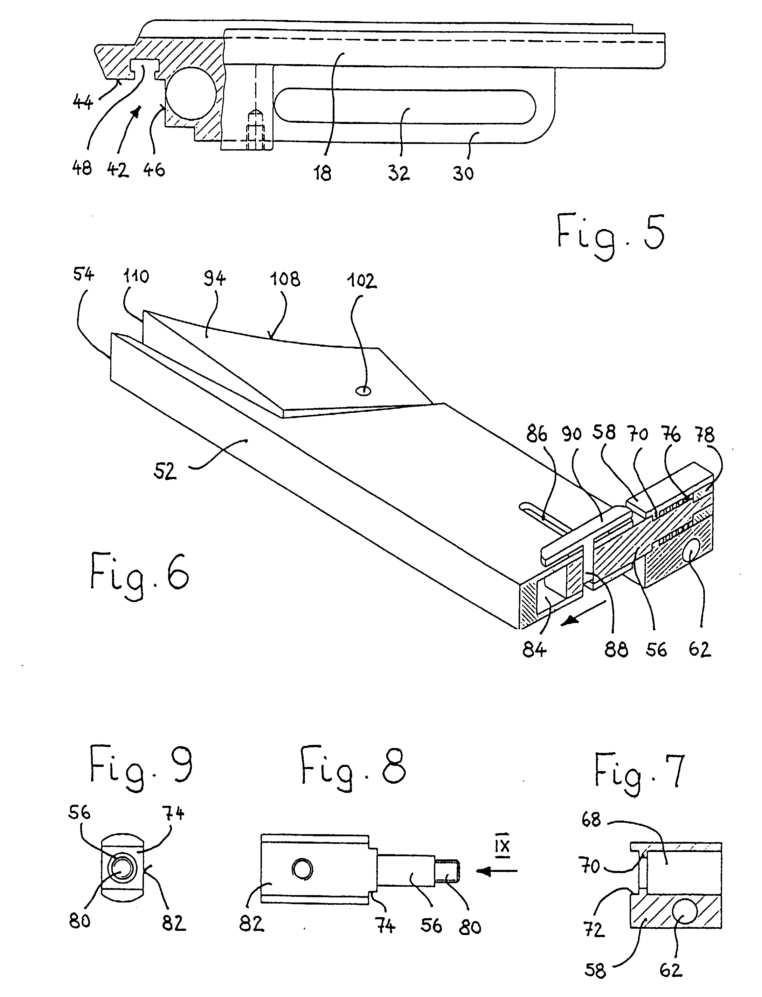

Wie vor allem Figur 5 zeigt, hat jede der beiden Seitenwände 18 an ihrem vorderen, nach außen weisenden Seitenbereich eine senkrecht verlaufende Aussparung 42 mit zwei rechtwinklig zueinander stehenden Begrenzungsflächen 44, 46, wobei in die in Längsrichtung der Seitenwand 18 verlaufende Begrenzungsfläche 44 eine im Querschnitt C-förmige Vertikalnut 48 eingearbeitet ist. Das untere Ende jeder Vertikalnut 48 ist offen und kann durch ein nicht weiter dargestelltes Abschlußelement, beispielsweise eine Schraube, verschlossen werden.

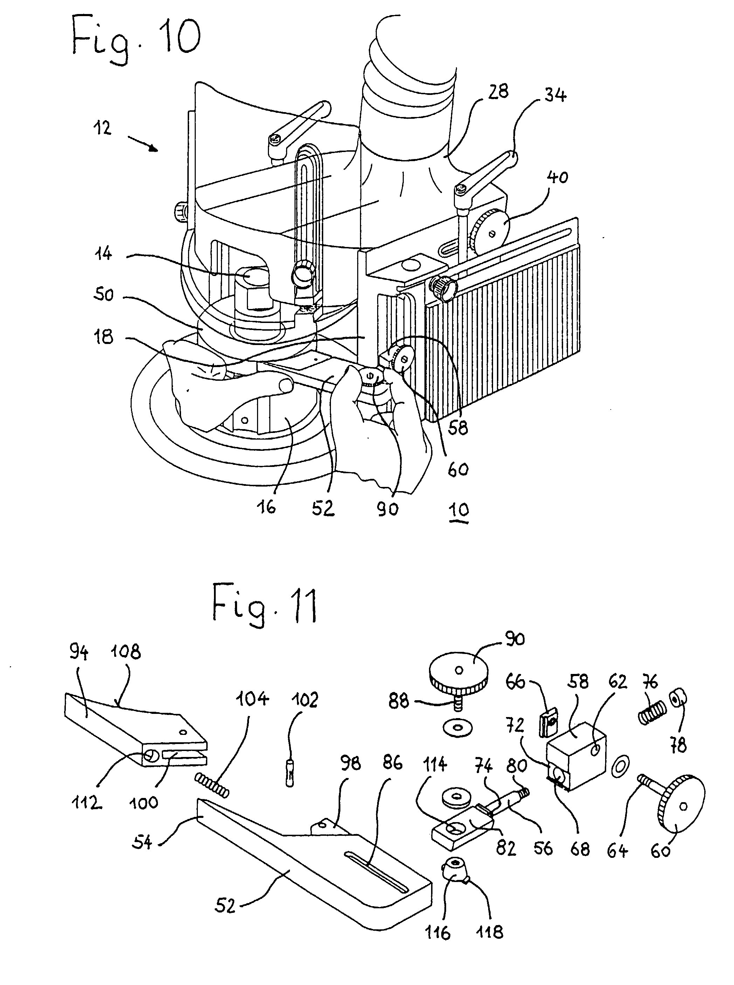

Zur Führung eines von dem Fräswerkzeug 16 zu bearbeitenden, bogenförmigen Werkstücks dient ein Anlaufring 50, der mittels eines Kugellagers auf der Spindel 14 gelagert ist. Um eine sichere Zuführung des Werkstücks zum Fräswerkzeug 16 zu gewährleisten, ist eine Anlaufleiste 52 vorgesehen, deren freie, schnabelförmig auslaufende Spitze 54 dem Außenumfang des Anlaufringes 50 gegenüberliegt. An ihrem anderen Ende ist die Anlaufleiste 52 über eine Stange 56 mit einem als quaderförmiger Gleitblock 58 ausgebildeten Klemmorgan verbunden. Der Gleitblock 58 ist in die vertikale Aussparung 42 an der Außenseite der Seitenwand 18 eingesetzt und mit Hilfe einer Klemmschraube 60 in der Vertikalnut 48 befestigt. Die Klemmschraube 60 ist durch eine Horizontalbohrung 62 des Gleitblocks 58 gesteckt und greift mit ihrem Gewindeende 64 in einen Klemmstein 66 ein (vgl. Figur 11), der in der Vertikalnut 48 verschiebbar ist. Nach Lösen der Klemmschraube 60 können der Gleitblock 58 und mit diesem die Anlaufleiste 52 nach oben und unten verschoben werden.

In den Figuren 6 bis 9 ist zu erkennen, daß in den Gleitblock 58 unterhalb der Bohrung 62 und rechtwinklig zu dieser eine Horizontalbohrung 68 eingearbeitet ist, die an ihrem zur Anlaufleiste 52 weisenden Ende durch eine Schulter 70 teilweise geschlossen ist. Außerhalb der Horizontalbohrung 68 schließt sich an die Schulter 70 ein quadratischer Polygonsitz 72 an, der in die Stirnseite des Gleitblocks 58 eingearbeitet ist. In diesen Polygonsitz 72 greift ein Abschnitt 74 mit entsprechend quadratisch ausgebildetem Polygonquerschnitt der Stange 56 ein, welche durch eine Feder 76 in der Horizontalbohrung 68 des Gleitblocks 58 gehalten wird. Die Feder 76 stützt sich einerseits an der Schulter 70 und andererseits an einem Flansch 78 ab, der auf ein Gewindeende 80 der Stange 56 aufgeschraubt ist.

Durch eine in Richtung des Pfeiles in Figur 6 von Hand ausgeübte Zugbewegung kann der Abschnitt 74 mit Polygonquerschnitt aus seinem Polygonsitz 72 herausgezogen werden, um die zylindrische Stange 56 und mit dieser die daran befestigte Anlaufleiste 52 aus einer ersten Raststellung in eine zweite, zu dieser um 90° gedrehte Raststellung zu schwenken. Die erste Raststellung zeigt Figur 1, bei der sich die Anlaufleiste 52 in ihrer Arbeitsstellung befindet, während die zweite Raststellung die in Figur 2 gezeigte Ruhestellung ist, bei der die Anlaufleiste 52 nach oben geschwenkt ist, beispielsweise für das Arbeiten mit einem gegen den Anlaufring 50 ausgewechselten Bogenfräsanschlag 50'.

Der aus dem Gleitblock 58 hervorstehende Teil der Stange 56 ist als abgeflachtes, plattenförmiges Ende 82 ausgebildet, das in einen schlitzförmigen Einschnitt 84 der Anlaufleiste 52 eingreift. In diesem Bereich hat die Anlaufleiste 52 sowohl auf ihrer Oberseite als auch auf ihrer Unterseite je ein Langloch 86, das sich in Längsrichtung der Anlaufleiste 52 erstreckt. Durch das obere Langloch 86 greift der Gewindeschaft 88 einer Stellschraube 90, so daß die Anlaufleiste 52 in Längsrichtung verstellt und um die Achse des Gewindeschaftes 88 verdreht werden kann. Damit ist es möglich, die schnabelförmige Spitze 54 der Anlaufleiste 52 so nahe wie möglich zum Anlaufring 50 hin zu schieben.

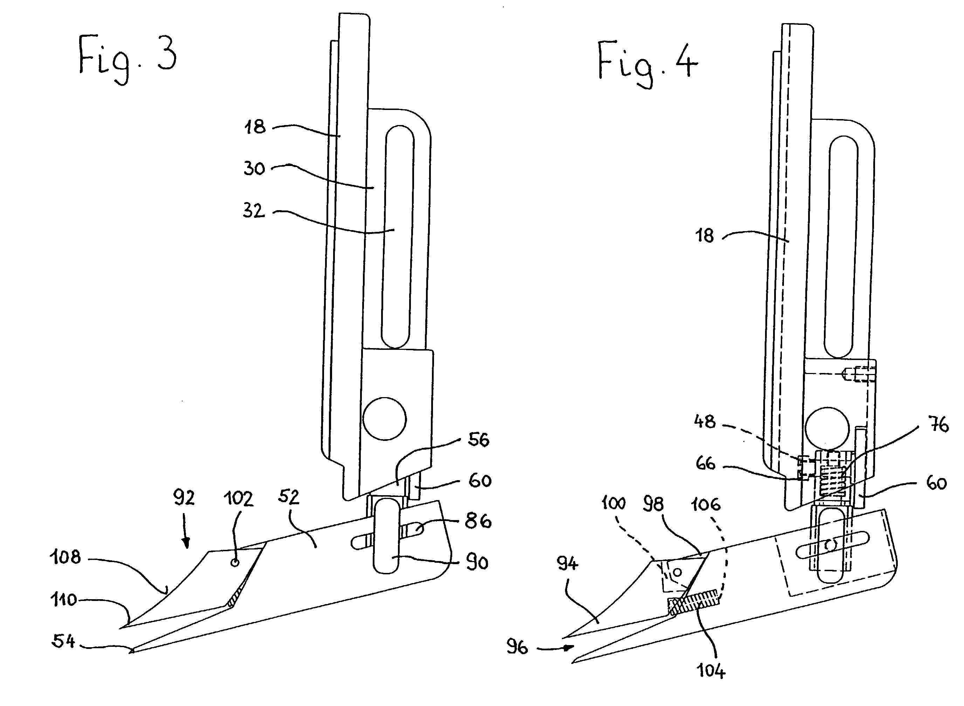

Vor allem die Figuren 3, 4 und 6 zeigen, daß am freien Ende der Anlaufleiste 52 ein Reibungsbremselement 92 angebracht ist, das in der Arbeitsstellung der Anlaufleiste 52 in Berührung mit der Außenseite des Anlaufringes 50 kommt. Dieses Reibungsbremselement 92 besteht aus einem Einsatz 94, der in einer zum Anlaufring 50 hin offenen Ausnehmung 96 der Anlaufleiste 52 angebracht ist. Im Bereich der Ausnehmung 96 steht von der Anlaufleiste 52 eine Rippe 98 ab, die in einen Schlitz 100 des Einsatzes 94 eingreift und eine Achse 102 trägt, über welche der Einsatz 94 gegen die Kraft einer Feder 104 schwenkbar gelagert ist. Die Feder 104 stützt sich einerseits in einer Bohrung 106 der Anlaufleiste 52 und andererseits in einer Ausnehmung 112 des Einsatzes 94 ab und ist bestrebt, diesen bei entsprechender Winkelstellung der Anlaufleiste 52 gegen die Außenfläche des Anlaufringes 50 zu drücken. Der Einsatz 94 hat eine dem Anlaufring 50 zugewandte, konkave Bogenfläche 108. Das freie, spitz zulaufende Ende 110 der Bogenfläche 108, das in der Arbeitsstellung an dem Anlaufring 50 anliegt, ist so geformt, daß es der schnabelförmig auslaufenden Spitze 54 der Anlaufleiste 52 eng benachbart gegenüberliegt, wenn der Einsatz 94 gegen die Kraft der Feder 104 vollständig oder fast vollständig in die Ausnehmung 96 der Anlaufleiste 52 eingeschwenkt ist, so daß in allen Arbeitsstellungen der Anlaufleiste 52 ein möglichst stufenloser Übergang bei der Werkstückzuführung von der Spitze 54 der Anlaufleiste 52 zum Außenumfang des Anlaufringes 50 gewährleistet ist.

Der als Reibungsbremselement 92 dienende Einsatz 94 der Anlaufleiste 52 besteht beispielsweise aus einem verschleißarmen Kunststoff, der ein geräuschloses Abbremsen des rotierenden Anlaufringes 50 gewährleistet.

Auch im Ausführungsbeispiel der Figuren 10 und 11 greift durch das obere Langloch 86 der Anlaufleiste 52 der Gewindeschaft 88 der Stellschraube 90, mit deren Hilfe die gewählte Stellung der Anlaufleiste 52 auf dem plattenförmigen Ende 82 der Stange 56 fixiert werden kann. Zu diesem Zweck ist bei dieser Variante in das plattenförmige Ende 82 eine durchgehende, konische Aufnahmebohrung 114 eingearbeitet, in welche ein konischer Klemmkörper 116 eingreift. Der konische Klemmkörper 116 hat an seinem Ende größeren Durchmessers, das nach unten weist, eine Führungsschiene 118, die in das untere Langloch verschiebbar eingreift, welches dem in die Oberseite eingearbeiteten Langloch 86 gegenüberliegt. Bei gelöster Stellschraube 90 kann somit die Anlaufleiste 52 in Richtung des Langloches 86 verstellt werden, wobei die an dem Klemmkörper 116 ausgebildete Führungsschiene 118 als Längsführung in dem unteren Langloch dient.

Wenn die Anlaufleiste 52 sowohl in ihrer Längsrichtung als auch bezüglich ihrer Winkelposition eingestellt ist, wird die Stellschraube 90 festgezogen, so daß sie über den konischen Klemmkörper 116 die Anlaufleiste 52 auf dem plattenförmigen Ende 82 der Stange 56 fixiert. Der hierfür benötigte Kraftaufwand ist geringer als beim Ausführungsbeispiel der Figur 6, da über den konischen Klemmkörper 116 eine größere Reibungskraft erzeugt werden kann, was sich günstig auf die Sicherheit der eingestellten Position der Anlaufleiste 52 auswirkt.

## Patentansprüche

1. Anlaufleiste mit einem Klemmorgan zur höhenverstellbaren Befestigung an einer Vertikalführung einer Schutzhaube für Holzfräsmaschinen, wobei von dem Klemmorgan eine Stange absteht, an der die Anlaufleiste verstellbar befestigt ist, dadurch gekennzeichnet, daß das Klemmorgan aus einem an der Vertikalführung fixierbaren Gleitblock (58) mit einer Horizontalbohrung (68) besteht, in der die Stange (56) gegen die Kraft einer Feder (76) längsverschieblich gelagert ist derart, daß sie von Hand aus einer ersten Raststellung in eine zweite, zu dieser um 90° gedrehte Raststellung schwenkbar ist.

2. Anlaufleiste nach Anspruch 1, dadurch gekennzeichnet, daß der Gleitblock (58) mittels eines von einer Klemmschraube (60) feststellbaren Klemmsteines (66) in einer die Vertikalführung bildenden Nut (48) befestigt ist, die in einen seitlich nach außen weisenden Bereich einer Seitenwand (18) der Schutzhaube (12) eingearbeitet ist.

3. Anlaufleiste nach Anspruch 1 oder 2, dadurch gekennzeichnet, daß ein aus dem Gleitblock (58) herausragender Abschnitt (74) der Stange (56) einen vorzugsweise quadratischen Polygonquerschnitt hat, der in den beiden Raststellungen in einen entsprechenden Polygonsitz (72) des Gleitblocks (58) eingreift.

4. Anlaufleiste nach einem der vorhergehenden Ansprüche, dadurch gekennzeichnet, daß sich die als Druckfeder ausgebildete Feder (76) mit einem Ende an einer Schulter (70) im Gleitblock (58) und mit dem gegenüberliegenden Ende an einem am Ende der Stange (56) angebrachten Flansch (78) abstützt.

5. Anlaufleiste nach einem der vorhergehenden Ansprüche, dadurch gekennzeichnet, daß die Stange (56) ein aus dem Gleitblock (58) hervorstehendes, plattenförmiges Ende (82) hat, das in einen Einschnitt (84) der Anlaufleiste (52) eingreift und über eine Stellschraube (90) verschiebbar und festklemmbar ist, die ein Langloch (86) in der Oberseite der Anlaufleiste (52) durchgreift.

6. Anlaufleiste nach Anspruch 5, dadurch gekennzeichnet, daß zum Fixieren der eingestellten Position der Anlaufleiste (52) ein konischer Klemmkörper (116) auf die Stellschraube (90) aufgeschraubt ist, der in eine konische Aufnahmebohrung (114) des plattenförmigen Endes (82) der Stange (56) eingreift.

7. Anlaufleiste nach Anspruch 6, dadurch gekennzeichnet, daß der konische Klemmkörper (116) an seinem Ende größeren Durchmessers eine Führungsschiene (118) aufweist, die in ein dem Langloch (86) in der Oberseite gegenüberliegendes Langloch in der Unterseite der Anlaufleiste (52) eingreift.

8. Anlaufleiste nach einem der vorhergehenden Ansprüche, dadurch gekennzeichnet, daß am freien Ende der Anlaufleiste (52) ein in Berührung mit einem Anlaufring (50) bringbares Reibungsbremselement (92) ausgebildet ist.

9. Anlaufleiste nach Anspruch 8, dadurch gekennzeichnet, daß das Reibungsbremselement (92) ein in einer zum Anlaufring (50) hin offenen Ausnehmung (96) der Anlaufleiste (52) angebrachter Einsatz (94) ist, der an dieser um eine in deren horizontaler Arbeitsstellung senkrechte Achse (102) gegen die Kraft einer Feder (104) schwenkbar gelagert ist und eine dem Anlaufring (50) zugewandte, konkave Bogenfläche (108) hat.

10. Anlaufleiste nach Anspruch 9, dadurch gekennzeichnet, daß das freie, spitz zulaufende Ende (110) der Bogenfläche (108) des Einsatzes (94), das in Arbeitsstellung an dem Anlaufring (50) anliegt, in der gegen die Kraft der Feder (104) in die Ausnehmung (96) der Anlaufleiste (52) eingeschwenkten Stellung der freien, schnabelförmig auslaufenden Spitze (54) am Ende der Ausnehmung (96) der Anlaufleiste (52) benachbart gegenüberliegt.

## Revendications

1. Barre d'appui avec un organe de blocage pour la fixation réglable en hauteur sur un guidage vertical d'un capot de protection pour fraiseuses à bois, et avec une tige qui dépasse de l'organe de blocage, sur laquelle est fixée la barre d'appui de façon réglable, caractérisée en ce que l'organe de blocage est constitué par un bloc coulissant (58) fixable sur le guidage vertical et comportant un trou horizontal (68) dans lequel la tige (56) est montée déplaçable longitudinalement à l'encontre de la force d'un ressort (76), de telle sorte qu'on peut la faire basculer manuellement d'une première position de crantage dans une deuxième position de crantage orientée de 90° par rapport à la première.

2. Barre d'appui selon la revendication 1, caractérisée en ce que le bloc coulissant (58) est bloqué, au moyen d'une pièce de blocage (66) verrouillable par une vis de serrage (60), dans une rainure (48) formant le guidage vertical, qui est aménagée dans une zone précise d'une paroi latérale (18) du capot de protection (12), à savoir la zone qui donne latéralement sur l'extérieur.

3. Barre d'appui selon la revendication 1 ou 2, caractérisée en ce qu'un segment (74) de la tige (56) dépassant du bloc coulissant (58) présente une section transversale polygonale de préférence quadratique, qui s'emboîte dans les deux positions de crantage dans un logement polygonal (72) correspondant du bloc coulissant (58).

4. Barre d'appui selon l'une des revendications précédentes, caractérisée en ce que le ressort (76) conçu comme ressort à pression s'appuie avec une extrémité sur un épaulement (70) du bloc coulissant (58) et avec l'extrémité opposée sur une bride (78) placée à l'extrémité de la tige (56).

5. Barre d'appui selon l'une des revendications précédentes, caractérisée en ce que la tige (56) présente une extrémité (82) en forme de plaque dépassant du bloc coulissant (58), extrémité qui s'emboîte dans une encoche (84) de la barre d'appui (52) et qui est déplaçable et verrouillable à l'aide d'une vis de réglage (90) qui pénètre dans un trou oblong (86) situé dans la face supérieure de la barre d'appui (52).

6. Barre d'appui selon la revendication 5, caractérisée en ce que pour fixer la position réglée de la barre d'appui (52) un élément de blocage conique (116) est vissé sur la vis de réglage (90), cet élément de blocage s'emboîtant dans un trou de logement conique (114) de l'extrémité (82) en forme de plaque de la tige (56).

7. Barre d'appui selon la revendication 6, caractérisée en ce que l'élément de blocage conique (116) présente à son extrémité qui a le plus grand diamètre un rail de guidage (118) qui s'emboîte dans un trou oblong situé dans la face inférieure de la barre d'appui (52) et opposé au trou oblong (86) situé dans la face supérieure.

8. Barre d'appui selon l'une des revendications précédentes, caractérisée en ce qu'à l'extrémité libre de la barre d'appui (52) on prévoit un élément de freinage à friction (92) qui peut entrer en contact avec un anneau d'appui (50).

9. Barre d'appui selon la revendication 8, caractérisée en ce que l'élément de freinage à friction (92) est un insert (94) monté dans une entaille (96) de la barre d'appui (52) qui s'ouvre vers l'anneau d'appui (50), cet insert étant monté sur la barre d'appui, contre la force d'un ressort (104), de façon orientable autour d'un axe (102) qui est vertical quand la barre d'appui se trouve dans la position de travail horizontale, et présentant une face arquée concave (108) orientée vers l'anneau d'appui (50).

10. Barre d'appui selon la revendication 9, caractérisée en ce que l'extrémité libre fuselée en pointe (110) de la face arquée (108) de l'insert (94), et s'ajustant contre l'anneau d'appui (50) dans la position de travail, se trouve accolée à la pointe libre (54) se terminant en forme de bec située à l'extrémité de l'entaille (96) de la barre d'appui (52) quand l'insert est en position basculée dans l'entaille (96) de la barre d'appui (52), contre la force du ressort (104).

## Claims

1. A run-up strip with a clamping member for fastening in a vertically adjustable manner to a vertical guide of a protective hood for wood-shaping machines, wherein a rod to which the run-up strip is secured in an adjustable manner projects from the clamping member, **characterized in that** the clamping member comprises a sliding block (58) fixable on the vertical guide and having a horizontal bore (68) in which the rod (56) is mounted so as to be longitudinally displaceable against the force of a spring (76), in such a way that the rod is pivotable by hand from a first locked position into a second locked position turned through 90° with respect to the first locked position.

2. A run-up strip according to Claim 1, **characterized in that** the sliding block (58) is secured - by means of a clamping block (66) fixable by a clamping screw (60) - in a groove (48) which forms the vertical guide and which is formed in an area of a lateral wall (18) of the protective hood (12) directed laterally outwards.

3. A run-up strip according to Claim 1 or 2, **characterized in that** a portion (74) of the rod (56) projecting out of the sliding block (58) has a preferably square polygonal cross-section which engages in a corresponding polygonal seat (72) in the sliding block (58) in the two locked positions.

4. A run-up strip according to one of the preceding Claims, **characterized in that** the spring (76) formed as a compression spring is supported at one end on a shoulder (70) in the sliding block (58) and at the opposite end on a flange (78) attached to the end of the rod (56).

5. A run-up strip according to one of the preceding Claims, **characterized in that** the rod (56) has a plate-shaped end (82) which projects from the sliding block (58) and which engages in a notch (84) in the run-up strip (52) and is displaceable and clampable by way of a setting screw (90) which engages through an elongate hole (86) in the top of the run-up strip (52).

6. A run-up strip according to Claim 5, **characterized in that** a conical clamping member (116), which engages in a conical receiving bore (114) in the plate-shaped end (82) of the rod (56), is screwed onto the setting screw (90) in order to fix the set position of the run-up strip (52).

7. A run-up strip according to Claim 6, **characterized in that** the conical clamping member (116) is provided at its end of larger diameter with a guide rail (118) which engages in an elongate hole - opposite the elongate hole (86) in the top - in the underside of the run-up strip (52).

8. A run-up strip according to one of the preceding Claims, **characterized in that** a friction-braking element (92) which can be brought into contact with a run-up ring (50) is formed at the free end of the run-up strip (52).

9. A run-up strip according to Claim 8, **characterized in that** the friction-braking element (92) is an insert (94) which is attached in a recess (96) in the run-up strip (52) open towards the run-up ring (50) and which is mounted on the said run-up strip (52) so as to be pivotable against the force of a spring (104) about a shaft (102) vertical in the horizontal operating position of the run-up strip (52) and it has a concave curved face (108) towards the run-up ring (50).

10. A run-up strip according to Claim 9, **characterized in that** the free end (110) - tapering to a point and resting against the run-up ring (50) in the operating position - of the curved face (108) of the insert (94) is opposite and adjacent to the free tip (54) terminating in a beak-shape at the end of the recess (96) in the run-up strip (52) in the position pivoted into the recess (96) in the run-up strip (52) against the force of the spring (104).
